# EUROPEAN PATENT SPECIFICATION

(11) **EP 3 415 063 B1**
(45) Date of publication and mention of the grant of the patent: **02.12.2020**
(21) Application number: 18177097.5
(22) Date of filing: 11.06.2018
(51) Int. Cl.: A47K 11/02, E03D 7/00, E03D 11/11, E03D 11/10

(54) **PORTABLE CHEMICAL TOILET**
TRANSPORTIERBARE CHEMISCHE TOILETTE
TOILETTE CHIMIQUE TRANSPORTABLE

(30) Priority: 15.06.2017 IT 201700066488
(43) Date of publication of application: 19.12.2018
(73) Proprietor: Ylda S.p.A., 50052 Certaldo (FI) (IT)
(72) Inventor: DIANA, Antonella, 50050 Montaione (Firenze) (IT)
(74) Representative: Soldatini, Andrea

(56) References cited:
- EP-A1- 2 732 745
- DE-C- 21 680
- US-A1- 2017 159 275

## Description

The present invention relates to the field of portable chemical toilets, i.e. transportable toilets adapted to be temporarily installed *on site* to meet the hygienic needs in building sites, event areas or others.

Movable or transportable toilets of a known type provide a cabin of plastic or metal material in which a tank for collecting both liquid and solid waste is provided; inside the tank there is a liquid for conditioning the waste with an antifermentative function to limit the development of unpleasant odors. Periodically, the content of the tank is emptied and replaced with clean liquid, ensuring the necessary continuity of operation without requiring connection to the water supply and especially to the sewage system. The toilet of course includes a bowl with an annular seat on which the user can sit, placed in communication with the tank.

In the specific field, one of the most felt needs is to make these toilets as healthy and hygienic as possible despite the lack of sewage and running water, so that the user can use them in a safe and comfortable condition. For this purpose, these toilets have evolved over time towards the direction of efficiently and effectively shutting the communication between the bowl and the waste tank. In fact, in older toilets the bowl and the tank were openly communicating, but this created a clear problem from the point of view of hygiene conditions (during use, liquid splashes of the tank could spatter, with the risk of dirtying or infecting the user) and of comfort of use (the contents of the tank were directly visible).

An innovative solution that has met considerable success and which has made it possible to overcome old-fashioned transportable toilets is the subject of the European patent EP0918112. In this patent, the opening hole between the bowl and the tank is shut by temporary collection means of the waste implemented by a continuous tape wound on rollers; the collecting means are also connected to the tank in a rotatable and removable manner to clear the opening hole and allow easy emptying and cleaning of the tank.

Although this solution satisfactorily meets the above needs of healthiness and comfort, the motivation to develop increasingly effective and, in particular, compact and structurally simple systems still remains.

The object of the present invention is therefore to provide a portable chemical toilet which is improved with respect to known ones, from the point of view of hygiene and cleanliness.

Yet another object of the present invention is to provide a portable chemical toilet which overcomes the existing ones in terms of convenience and ease of use.

Finally, it is a further object of the portable chemical toilet according to the invention to be simple from a constructive point of view and therefore reliable.

These objects are achieved by the portable chemical toilet according to independent claim 1.

The features and advantages of the portable chemical toilet according to the present invention shall now be described in more detail with the following description of an embodiment thereof, made by way of a non-limiting example with reference to the accompanying drawings, in which:

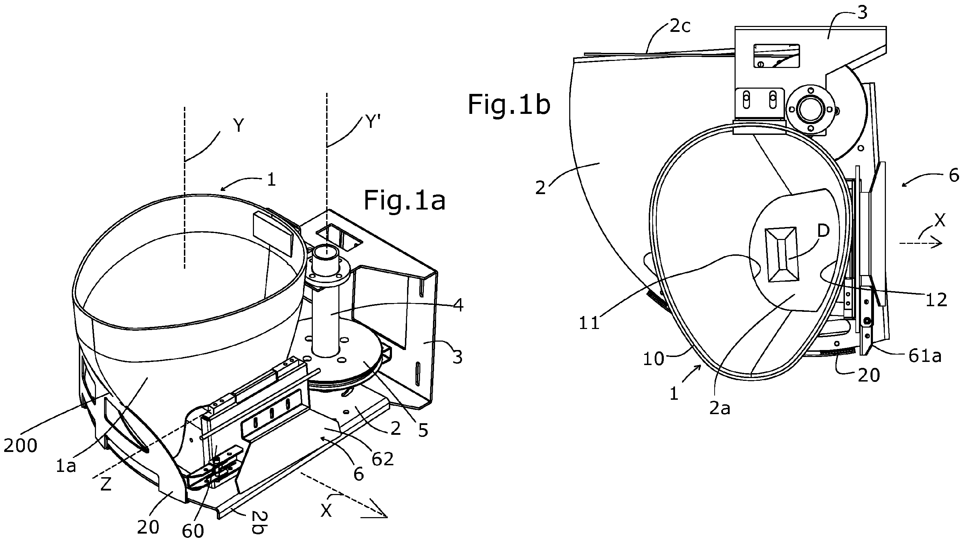

- figures 1a and 1b are a perspective view and a top plan view, respectively, of the functional group of a portable chemical toilet according to the invention and in particular of a bowl with means for temporarily holding the waste, such means being in a position of use of the bowl, i.e. the position which is taken in a stand-by condition and as well during the dejection step by a user; and

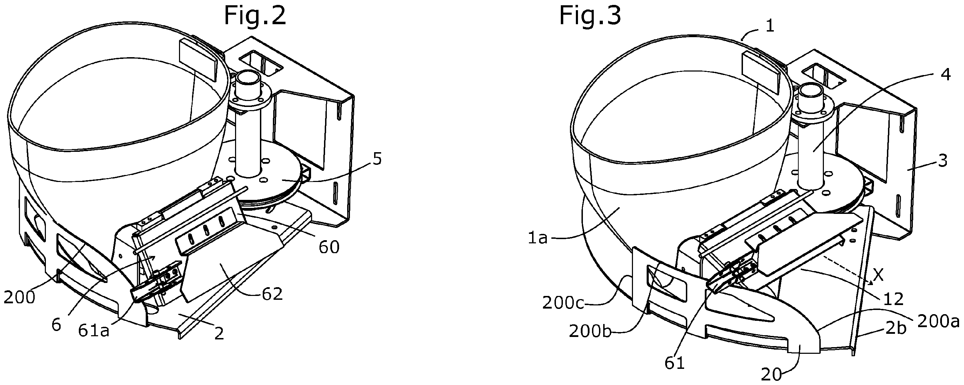

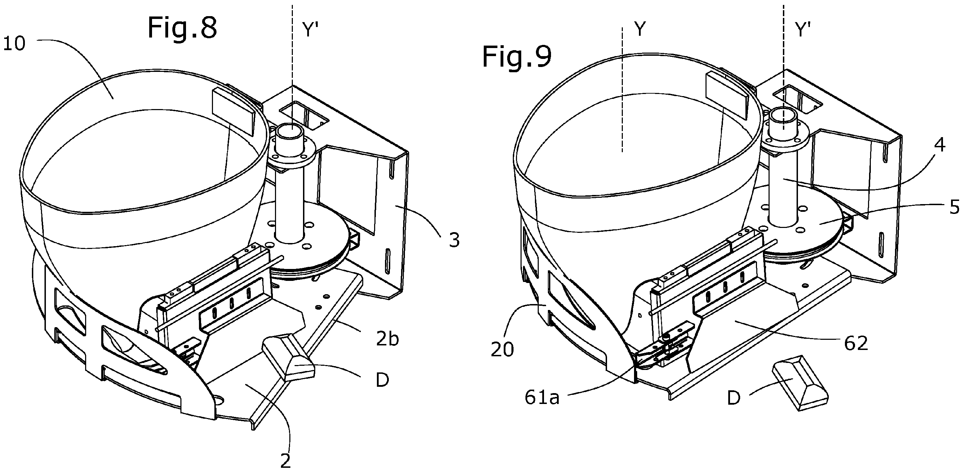

- figures 2 to 9 show the group in the previous figures in various operating positions, passing from the bowl use position to the waste removal position (figure 8), up to the return to the use position (figure 9).

With reference to the above figures, the portable chemical toilet according to the invention comprises a bowl 1 (shown in the figure only schematically) and a tank, below the bowl, for collecting the user's waste (i.e. solid waste). Clearly, the toilet also serves for urination and will be used for this purpose with similar methods to those described below, but of course solid dejections pose the main problems of dumping and cleaning, so reference will be made to this hypothetical use, with the dejections represented schematically and indicated by reference letter D. The tank, of the known type, is not shown.

The bowl 1 has a conventional substantially paraboloid shape, i.e. it has a substantially oval upper mouth 10, on which an annular seat omitted herein is arranged, and a lower hole 11 which puts the bowl, more properly the inside thereof, in contact with the tank. The upper mouth 10 and the lower hole 11 are superimposed along a vertical axis Y, perpendicular to the ground or to the walking surface of the toilet, defined by a booth according to the traditional uses of the field.

Temporary waste holding means 2 are then provided for shutting the lower hole 11. According to the invention the holding means comprise a plate 2 adapted to reversibly shut the hole 11, being arranged in a substantially horizontal position, that is perpendicular to the vertical axis Y. In a use position of the bowl (that is, as mentioned, of awaiting and receiving the waste), the plate is exposed through the lower hole 11 over a portion 2a delimited by the hole itself and obviously intended to block and hold the waste during use of the toilet by a user.

The plate 2 is rotatable about a rotation axis Y' parallel to the vertical axis Y, with respect to a fixed bearing structure 3 which is typically connected to the wall of the booth. More in detail, the connection between plate 2 and bearing structure 3 is here implemented through a tubular element 4 which rotatably engages with the structure and which is connected integrally, at a lower end, to plate 2. This is a constructive example which is obviously not limiting, since various obvious alternatives are available for a man skilled in the art.

This rotation takes place in an advancement run between the above use position and a position of complete removal of the waste from the bowl, positions which represent the end stops of the runs and between which the plate, due to an appropriate extension, always keeps the lower hole 11 shut, keeping the inside of the tank not directly accessible and visible. In a return run, the rotation movement takes place in the opposite direction. Preferably, the plate has the outline of a substantially circular segment (or circle wedge), delimited between two radial edges 2b, 2c which get close to the hole 11 in the respective run end positions, i.e. a first (front) edge 2b and a second (rear) edge 2c which become arranged adjacent to the hole 11 respectively in the use position and in the waste removal position.

The tubular element 4 is associated to transmission means 5 designed to drive the rotation about the axis Y'. In the embodiment shown in the figures, also in this case merely by way of example, the transmission means provide a pulley 5 for engagement with a belt pulled through a pedal mechanism of an obviously structured arrangement, or with a handle, or with a button being those pull systems assisted or not by a motorized unit. Other solutions can nevertheless be provided as far as both the transmission (for example toothed systems), and the drive system, are concerned.

The drive of the plate can also be an active one in the direction from the use position to the waste removal position, and a passive one, i.e. assisted by elastic return means, in the opposite direction. This drive, whose results will be clarified shortly and according to a preferred solution for hygiene, simplicity and reliability, is of the pedal type, also activates a system for dispensing rinsing and sanitizing fluid, not represented or described, not falling within the scope of the present invention and being entirely arranged as in known systems.

On a side wall 1a of the bowl, a side waste passage window 12 opens in the lower region, being it in practice a cut-out that expands the lower hole 11 upwards. In the toilet according to the invention, therefore, the exit of the waste from the bowl takes place in a horizontal direction X perpendicular to the vertical axis Y.

Automatic closure means 6 for closing the window 12 and pushing the waste away are then provided; these means, besides cleaning the temporary holding means (e.g. the plate 2) from the waste and dropping them into the tank, as will be explained hereafter, are intended for selectively close or open the waste exit window 12, in response to the movement of the plate itself. In particular, starting from said use position, the advancement run of the plate 2 towards the waste removal position corresponds to a movement of the window closure means 6 to open the window 12; this rotation movement of the plate causes the translation of the portion 2a and as a result the waste held on the plate itself are carried out of the bowl. Near the opposite run end position, from which the return run of the rotation of the plate 2 starts, the window closure means 6 are oppositely driven to close the window 12; as a result, during the aforesaid return run, not only a return of the waste D through the window and inside the bowl is prevented, but also a scraping action on the plate is exerted, and at the same time (and more importantly) the waste are pushed away from the plate and dumped into the tank once the return to the use position has been completed.

In a preferred embodiment, the window closure and waste push means 6 comprise a lid 60 hinged to the bowl 1 according to a pivoting arrangement about a horizontal hinge axis Z, spaced from the plane of the plate 2, on which the same lid is in contact along a lower free edge thereof. The opening rotation of the lid 60 around the hinge axis, starting from a closing position in mechanical abutment on the outside of the bowl, possibly stabilized by spring means, takes place outwards, activated as mentioned by the rotation of the plate 2 about the axis Y in the advancement run, due to the contact between a control finger 61 integral with the lid 6 and a cam means 20 integral with the plate 2.

The cam means 20 is defined by a shaped peripheral plate wall which rises vertically from the plate along at least a part of its circumferential periphery, externally to the side wall 1a of the bowl. A top free edge 200 of the partition defines the cam profile evolving so as to start from a point close to the first radial edge 2b of the plate, with a first arc section 200a, and then continuing with a straight horizontal segment 200b and closing with a final vertical segment 200c which is joined to the plate at a point relatively close to the second radial edge 2c. The control finger comprises a rod 61 which projects from the lid 60 such that its free end 61a is adapted to interfere with the cam profile of the partition 20 during the rotation movement of the plate, in particular in the advancement run.

The rod, moreover, is partially collapsible when a horizontal pressure is applied on this free end 61a at a frontal part, that is, a part facing the outside of the lid. In particular, the rod 61, for example, comprises two portions mutually aligned and hinged in such a way that the free end is foldable with an elastic contrast with respect to a stem portion integral with the lid, the free end being also provided on the outer/front side with a curved lead profile which is adapted to promote such folding by abutting in the return run of the plate on the vertical edge segment 200c of the plate wall 20. Different solutions, for example of a telescopic nature, can be equally effective.

Advantageously, on the front or outer face of the lid (the first spatial reference is to be understood with respect to the movement of the plate 2, the second to the geometry of the bowl 1), a doctor blade 62 is mounted which exerts the actual waste pushing and plate scraping function, having to this purpose a slightly inclined arrangement and, in any case, adapted to scrape the plate 2 to sweep the surface thereof in the return run.

With reference in particular to figures 2 to 9, the operation of the toilet according to the invention, already substantially understandable from the above description, is further clarified as follows.

When the user uses the toilet for his own physical needs, the plate is in the use position, and receives the waste on its portion 2a (figures 1a and 1b). The lid 60 is lowered to close the window 12, being positioned near the first edge 2b. Once the dejection has been completed, the rinsing and drainage system is activated, and the rotation of the plate 2 is then activated, in the outward run. Consequently, the control finger/rod 61, in the extended configuration, abuts on plate wall 20 with the arc segment 200a (figure 2) and then, sliding thereon, it goes up and continues to slide on the horizontal straight section. 200b (figures 3 and 4). As a consequence, the lid is lifted allowing the waste D to exit the bowl through the window 12, transported by the plate 12 which progressively performs its frontal extraction motion.

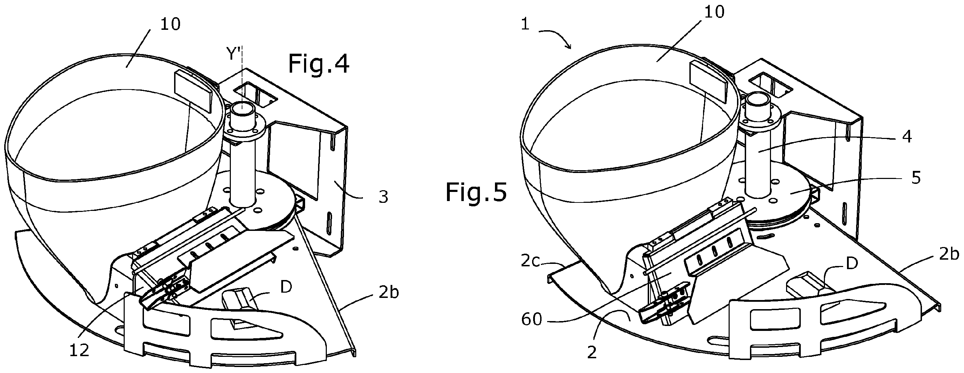

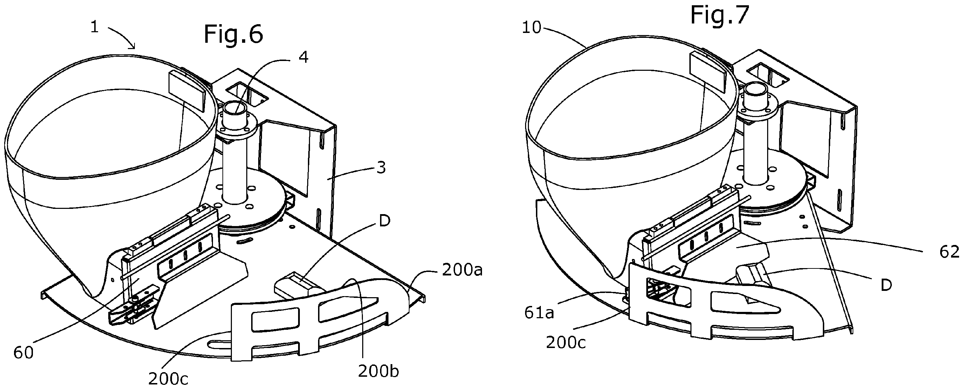

When the finger/rod 61 reaches the end of the upper segment 200b of the edge 200, it is no longer supported and, falling down along the vertical segment 200c, it causes the lid to close again (figure 5); immediately after, the plate arrives at the run end of complete waste removal (figure 6), this being the point at which the run is reversed and the plate progressively returns to its original position. The inner part of the finger 61 is hit then by the vertical segment 200c of the plate wall 20 which is able to fold the end 61a thereof, so that the finger here does not interfere and allows the lid to remain lowered with the same plate wall 20 sliding thereon on the outside.

Figures 7 to 9 show that as a consequence, the doctor blade 62 of the lid 60 is in the condition of blocking the waste D out of the bowl, with the plate that by sliding under them is also scraped, until by approaching the return to the original use position, the doctor blade gets close to the first radial edge 2b; by lacking the underlying support, the waste is pushed to fall into the tank beyond the first edge 2b at the concurrent restoration of the starting position.

The toilet according to the invention has several advantages.

In particular, the plate 62 always shuts the lower hole 11 during the rotation movement. The hole is therefore never cleared and during the use of the toilet the user is completely isolated from the waste collection tank. This contributes to increase the hygiene of the toilet and the comfort of use.

However, at the same time, the system and the plate are easy to remove if necessary, in order to access the tank and allow it to be emptied and cleaned.

The plate 62 can be made of metal, such as stainless steel but also in plastic material, therefore with productive savings and with the possibility of adding special antibacterial additives to the material, thus further improving the hygienic conditions of the toilet.

As mentioned, the plate can be moved by means of an electric motor or manually, with a pedal movement which simultaneously activates the jet of sanitizing liquid. The pedal movement, in addition to being a technically simpler solution, is also particularly hygienic because the user can activate it by foot and not by the hands.

The mechanism in general is constructively simple, with a reduced number of parts and therefore more advantageous from a production and maintenance point of view, as well as being more resistant to accidental breakage.

The present invention has been described with reference to a preferred embodiment thereof. In this embodiment, the closure means for reversibly closing the window 12 and pushing the waste have the nature of a tilting lid, and the automatic drive system associated with the plate is configured consequently.

## Claims

1. A portable chemical toilet comprising a bowl (1) having a sewage hole (11) and a seat for a user, wherein the bowl (1) extends according to a bowl axis (Y) between the sewage hole (11) and the seat, a tank for a conditioning liquid placed underneath said bowl (1), waste holding mobile means (2) for temporary holding waste which waste holding mobile means (2) is arranged between said bowl (1) and said tank and shutting said sewage hole (11), flushing means adapted to deliver water or a sanitizing liquid inside the bowl, and drive means adapted to be actuated by the user to control the motion of said mobile means (2) and at the same time to operate said flushing means, wherein said mobile holding means (2) comprise a plate arranged on a plane orthogonal to said bowl axis (Y) and swiveling around a plate rotation axis (Y'), which axis is parallel to the bowl axis (Y), between a use position and a waste-removal position and always keeping said sewage hole (11) shut; wherein a waste passage window (12) is formed as a cut-out in a side wall (1a) of said bowl (1), continuously with the sewage hole (11) and extending upwards from said sewage hole (11); and wherein the toilet further comprises closure means (60) adapted to reversibly close said waste passage window (12) and to push the waste on the plate, whereby the closure means (60) is automatically driven by said swiveling of said plate around said rotation axis (Y') to open the waste passage window (12) when the plate swivels from said use position to said waste removal position according to a plate advancement run, thereby allowing the waste to be carried out of the bowl (1) throught the waste passage window (12), and to close the waste passage window (12) when the plate is returning from said waste removal position to said use position according to a plate return run, thereby preventing the waste from getting back into the bowl (1) through said waste passage window (12) and pushing during the returning of the plate the waste away from the plate to dump it into said tank.

2. The portable chemical toilet according to claim 1, comprising cam means (200) integral with said plate and adapted to engage with said closure means (60) to automatically drive the opening and closing motion thereof.

3. The portable chemical toilet according to claim 2, wherein said window closure means (60) comprise a lid (60) hinged around an axis (Z) parallel to the plane of said plate, pivoting between a closing position, in which it abuts on said side wall (1a) of said bowl, and an opening position, in which it is lifted outwards from the side wall (1a), said cam means (200) extending from said plate in a direction parallel with said bowl axis.

4. The portable chemical toilet according to claim 3, wherein said plate has substantially the shape of a circular sector delimited between a first radial edge (2b) and a second radial edge (2c), both adapted to become adjacent to said hole (11) respectively in correspondence to said use position and said waste-removal position, said circular sector being further delimited by a circumferential edge from which a peripheral plate wall (20) rises up, said peripheral plate wall (20) having a top edge that forms said cam means (200).

5. The portable chemical toilet according to claim 4, wherein said peripheral plate wall (20) comprises a first arc-shaped segment (200a) starting from said circumferential edge in proximity to said first radial edge (2b), followed by a straight segment (200b), the top edge of which being parallel to said plate, the straight segment (200b) followed then by a final segment (200c), the peripheral edge of which being orthogonal to the plane of the plate and joining with the plate at a point closer to said second radial edge (2c) than to said first radial edge (2b).

6. The portable chemical toilet according to claim 4 or 5, wherein said cam means (200) is adapted to engage with a control rod (61) projecting from said lid (60), said rod comprising a free end (61a) adapted to engage with said top edge forming said cam means, during the rotation of the plate in said advancement run, and to collapse for being hit by said peripheral plate wall during said return run.

7. The portable chemical toilet according to claim 6, wherein said free end (61a) of said control rod (61) is foldable with an elastic opposition with respect to a stem portion of the control rod (61) fixed with the lid (60), said free end (61a) being provided at an outer side thereof with a curved outline adapted to promote the folding by abutting with said peripheral plate wall (20) in the return run of the plate.

8. The portable chemical toilet according to any of the claims from 3 to 7, comprising elastic means adapted to promote the motion of said lid (60) towards said closing position.

9. The portable chemical toilet according to any of the claims from 3 to 8, wherein a doctor blade (62) is mounted on an outer face of said lid (60) and adapted to directly push the waste and at the same time to scrape said plate during said return run.

10. The portable chemical toilet according to claim 9, wherein said doctor blade (62) is inclined with respect to said lid (60).

11. The portable chemical toilet according to any of the previous claims, wherein said advancement and return runs of said plate from and to said use position are both controlled by said drive means.

12. The portable chemical toilet according to claim 11, wherein the return run to said use position is assisted by elastic return means.

13. The portable chemical toilet according to any of the previous claims, wherein said drive means comprise a pedal device.

14. The portable chemical toilet according to any of the previous claims, wherein said plate is made at least predominantly of a plastic material added with an antibacterial agent.

## Patentansprüche

1. Transportable chemische Toilette, die enthält eine Schüssel (1), die ein Abwasserloch (11) und einen Sitz für einen Anwender hat, wobei die Schüssel (1) längs einer Schüsselachse (Y) zwischen dem Abwasserloch (11) und dem Sitz verläuft,
einen Tank für eine Konditionierungsflüssigkeit, der unter der Schüssel (1) angeordnet ist, mobile Abfall-Aufnahmeeinrichtungen (2) zum temporären Aufnehmen von Abfall, wobei die mobilen Abfall-Aufnahmeeinrichtungen (2) zwischen der Schüssel (1) und dem Tank angeordnet sind und das Abwasserloch (11) abschließen, Spüleinrichtungen, die dazu ausgelegt sind, um Wasser oder eine Sanitärflüssigkeit ins Innere der Schüssel zu liefern, und Antriebseinrichtungen, die dazu ausgelegt sind, um von dem Anwender betätigt zu werden, um die Bewegung der mobilen Einrichtungen (2) zu steuern und gleichzeitig die Spüleinrichtungen zu betätigen, wobei
die mobilen Aufnahmeeinrichtungen (2) eine Platte enthalten, die in einer Ebene orthogonal zu der Schüsselachse (Y) angeordnet ist und um eine Plattendrehachse (Y'), welche Achse parallel zu der Schüsselachse (Y) ist, zwischen einer Gebrauchsposition und einer Abfallentfernungsposition schwenkt und das Abwasserloch (11) immer verschlossen hält; wobei ein Abfall-Durchgangsfenster (12) als ein Ausschnitt in einer Seitenwand (1a) der Schüssel (1) durchgehend mit dem Abwasserloch (11) und von dem Abwasserloch (11) aufwärts verlaufend ausgebildet ist; und wobei die Toilette ferner Verschlusseinrichtungen (60) enthält, die dazu ausgelegt sind, um das Abfall-Durchgangsfenster (12) reversibel zu verschließen und den Abfall auf der Platte zu verschieben, wodurch die Verschlusseinrichtungen (60) automatisch durch das Schwenken der Platte um die Drehachse (Y') angetrieben werden, um das Abfall-Durchgangsfenster (12) zu öffnen, wenn die Platte gemäß einem Plattenvorschublauf aus der Gebrauchsposition in die Abfallentfernungsposition schwenkt, wodurch es dem Abfall gestattet wird, aus der Schüssel (1) durch das Abfall-Durchgangsfenster (12) ausgetragen wird, und das Abfall-Durchgangsfenster (12) zu schließen, wenn die Platte gemäß einem Plattenrückkehrlauf aus der Abfallentfernungsposition in die Gebrauchsposition zurückkehrt, wodurch der Abfall daran gehindert wird, durch das Abfall-Durchgangsfenster (12) in die Schüssel (1) zurückzukehren, und während dem Rückkehren der Platte der Abfall von der Platte weg geschoben wird, um ihn in den Tank abzuladen.

2. Transportable chemische Toilette nach Anspruch 1, die Nockeneinrichtungen (200) enthält, die integral mit der Platte und dazu ausgelegt sind, mit den Verschlusseinrichtungen (60) in Eingriff zu treten, um die Öffnungs- und Schließbewegung davon zu betreiben.

3. Transportable chemische Toilette nach Anspruch 2, wobei die Fensterverschlusseinrichtungen (60) einen Deckel (60) enthält, der um eine Achse (Z) parallel zur Ebene der Platte angelenkt zwischen einer Schließposition, in der er an der Seitenwand (1a) der Schüssel anliegt, und einer nach außen angehobenen Öffnungsposition schwenkt, wobei die Nockeneinrichtung (200) von der Platte in eine Richtung parallel zu der Schüsselachse verlaufen.

4. Transportable chemische Toilette nach Anspruch 3, wobei die Platte (2) im Wesentlichen die Form eines kreisförmigen Sektors aufweist, der zwischen einem ersten radialen Rand (2b) und einem zweiten radialen Rand (2c) begrenzt ist, die beide ausgelegt sind, um benachbart zu dem Loch (11) jeweils korrespondierend zu der Gebrauchsposition und der Abfallentfernungsposition zu werden, wobei der kreisförmigen Sektor ferner von einem Umfangsrand begrenzt ist, von dem eine Umfangsplattenwand (20) aufsteigt, wobei die Umfangsplattenwand (20) einen oberen Rand aufweist, der die Nockeneinrichtungen (200) bildet.

5. Transportable chemische Toilette nach Anspruch 4, wobei die Umfangsplattenwand (20) ein erstes bogenförmiges Segment (200a) enthält, das an dem Umfangsrand in der Nähe des ersten radialen Randes (2b) beginnt, gefolgt von einem geraden Segment (200b), dessen oberer Rand parallel zu der Platte ist, wobei auf das gerade Segment (200b) dann ein Endsegment (200c) folgt, dessen Umfangsrand orthogonal zu der Ebene der Platte ist und auf die Platte an einem Punkt trifft, der näher an dem zweiten radialen Rand (2c) als an dem ersten radialen Rand (2b) ist.

6. Transportable chemische Toilette nach Anspruch 4 oder 5, wobei die Nockeneinrichtungen (200) so ausgelegt sind, dass sie mit einer Steuerstange (61) in Eingriff kommen, die aus dem Deckel (60) herausragt, wobei die Stange ein freies Ende (61a) enthält, das ausgelegt ist, um mit dem oberen Rand, der die Nockeneinrichtungen bildet, während des Drehens der Platte bei dem Vorschublauf in Eingriff zu kommen und während des Rückkehrlaufs durch das Treffen durch die Umfangsplattenwand zusammenzuklappen.

7. Transportable chemische Toilette nach Anspruch 6, wobei das freie Ende (61a) der Steuerstange (61) mit einem elastischen Gegenüber bezüglich einem Schaftteil der Steuerstange (61) faltbar ist, das an dem Deckel (60) befestigt ist, wobei das freie Ende (61a) an einer Außenseite davon mit einer gekrümmten Kontur versehen ist, die dazu ausgelegt ist, um das Falten durch Anlegen an der Umfangsplattenwand (20) bei dem Rückkehrlauf der Platte zu fördern.

8. Transportable chemische Toilette nach einem der Ansprüche 3 bis 7, enthaltend Elastikeinrichtungen, die dazu ausgelegt sind, um die Bewegung des Deckels (60) in Richtung der Schließposition zu fördern.

9. Transportable chemische Toilette nach einem der Ansprüche 3 bis 8, wobei eine Rakelklinge (62) an einer Außenseite des Deckels (60) angebracht und dazu ausgelegt ist, um den Abfall direkt weg zu drücken und gleichzeitig die Platte während des Rückkehrlaufs abzuschaben.

10. Transportable chemische Toilette nach Anspruch 9, wobei die Rakelklinge (62) in Bezug auf den Deckel (60) schräg verläuft.

11. Transportable chemische Toilette nach einem der vorhergehenden Ansprüche, wobei die Vorschub- und Rückkehrläufe der Platte aus der und in die Gebrauchsposition beide durch dieselben Antriebseinrichtungen gesteuert werden.

12. Transportable chemische Toilette nach Anspruch 11, wobei der Rückkehrlauf in die Gebrauchsposition durch elastische Rückkehreinrichtungen unterstützt wird.

13. Transportable chemische Toilette nach einem der vorhergehenden Ansprüche, wobei die Antriebseinrichtungen eine Pedalvorrichtung enthalten.

14. Transportable chemische Toilette nach einem der vorhergehenden Ansprüche, wobei die Platte (2) mindestens überwiegend aus einem Kunststoffmaterial besteht, dem ein antibakterielles Mittel zugesetzt ist.

## Revendications

1. Des toilettes chimiques portatives comprenant une cuvette (1) ayant un trou d'évacuation des eaux usées (11) et un siège pour un utilisateur, dans lesquelles la cuvette (1) s'étend selon un axe de cuvette (Y) entre le trou d'évacuation et le siège, un réservoir pour un liquide de conditionnement situé en dessous de ladite cuvette (1), des moyens mobiles de rétention de déchets (2) pour retenir temporairement les déchets lesquels moyens mobiles de rétention de déchets (2) étant disposés entre ladite cuvette et ledit réservoir et obturant ledit trou d'évacuation (11), des moyens de rinçage adaptés pour délivrer de l'eau ou un liquide désinfectant à l'intérieur de la cuvette, et des moyens de commande adaptés pour être actionnés par l'utilisateur pour commander le mouvement desdits moyens mobiles (2) et en même temps pour actionner lesdits moyens de rinçage, dans lesquelles lesdits moyens mobiles de rétention (2) comprennent un plateau (2) disposé dans un plan orthogonal audit axe de cuvette (Y) et pivotant autour d'un axe de rotation de plateau (Y'), lequel axe étant parallèle à l'axe de cuvette (Y), entre une position d'utilisation et une position d'élimination des déchets et en maintenant toujours obturé ledit trou d'évacuation (11) ; dans lesquelles une fenêtre de passage de déchets (12) est réalisée par une découpe dans une paroi latérale (1a) de ladite cuvette (1), en continuité avec le trou d'évacuation (11) et s'étendant vers le haut à partir dudit trou d'évacuation (11) ; lesdites toilettes comprenant en outre des moyens de fermeture (60) adaptés pour fermer de manière réversible ladite fenêtre de passage de déchets (12) et pour pousser les déchets sur le plateau, de sorte que les moyens de fermeture (60) sont automatiquement commandés par ladite rotation du dit plateau autour du dit axe de rotation (Y') pour ouvrir ladite fenêtre de passage de déchets (12) quand le plateau pivote à partir de ladite position d'utilisation vers ladite position d'élimination des déchets lors d'une course d'avancement du plateau, permettant ainsi aux déchets d'être évacués hors de la cuvette (1) à travers la fenêtre de passage de déchets (12), et d'obturer la fenêtre de passage de déchets (12) quand le plateau revient de ladite position d'élimination des déchets vers ladite position d'utilisation lors d'une course de retour du plateau, empêchant ainsi les déchets de revenir dans la cuvette (1) via ladite fenêtre de passage de déchets (12) et, pendant le retour du plateau, poussant le déchets hors du plateau pour les déverser dans ledit réservoir.

2. Les toilettes chimiques portatives selon la revendication 1, comprenant des moyens de came (200) solidaires dudit plateau et adaptés pour coopérer avec lesdits moyens de fermeture (60) pour commander automatiquement le mouvement d'ouverture et de fermeture de ceux-ci.

3. Les toilettes chimiques portatives selon la revendication 2, dans lesquelles lesdits moyens de fermeture de la fenêtre (60) comprennent un obturateur (60) monté pivotant autour d'un axe (Z) parallèle au plan dudit plateau, pivotant entre une position de fermeture, dans laquelle il vient en butée contre ladite paroi latérale (1a) de ladite cuvette, et une position d'ouverture dans laquelle il est soulevé vers l'extérieur à partir de la paroi latérale (1a), lesdits moyens de came (200) s'étendant à partir dudit plateau dans une direction parallèle au dit axe de la cuvette.

4. Les toilettes chimiques portatives selon la revendication 3, dans lesquelles ledit plateau a sensiblement la forme d'un secteur circulaire délimité entre un premier bord radial (2b) et un second bord radial (2c), tous deux adaptés pour se positionner de façon adjacente au dit trou (11) respectivement en correspondance avec ladite position d'utilisation et ladite position d'élimination des déchets, ledit secteur circulaire étant en outre délimité par un bord circonférentiel à partir duquel s'élève une paroi de plateau périphérique (20), ladite paroi de plateau périphérique ayant un bord supérieur qui forme lesdits moyens de came (200).

5. Les toilettes chimiques portatives selon la revendication 4, dans lesquelles ladite paroi de plateau périphérique (20) comprend un premier segment en forme d'arc de cercle (200a) partant dudit bord circonférentiel à proximité du dit premier bord radial (2b), suivi d'un segment rectiligne (200b) dont le bord supérieur est parallèle au dit plateau, le segment rectiligne (200b) étant suivi par un segment final (200c) dont le bord périphérique est orthogonal au plan du plateau et rejoignant le plateau en un point plus proche dudit deuxième bord radial (2c) que du premier bord radial (2b).

6. Les toilettes chimiques portatives selon l'une des revendications 4 et 5, dans lesquelles lesdits moyens de came (200) sont adaptés pour coopérer avec une tige de commande (61) faisant saillie dudit obturateur (60), ladite tige comprenant une extrémité libre (61a) adaptée pour coopérer avec ledit bord supérieur formant lesdits moyens de came, pendant la rotation du plateau dans sa course d'avancement, et pour s'effacer pour être frappée par ladite paroi de plateau périphérique pendant la course de retour.

7. Les toilettes chimiques portatives selon la revendication 6, dans lesquelles ladite extrémité libre (61a) de ladite tige de commande (61) est pliable avec une opposition élastique par rapport à une partie de tige de commande (61) fixée à l'obturateur, ladite extrémité libre (61a) étant munie sur un côté extérieur d'un contour incurvé adapté pour favoriser le pliage en venant en butée avec ladite paroi de plateau périphérique (20) dans la course de retour du plateau.

8. Les toilettes chimiques portatives selon l'une quelconque des revendications 3 à 7, comprenant des moyens élastiques adaptés pour favoriser le mouvement dudit obturateur (60) vers ladite position de fermeture.

9. Les toilettes chimiques portatives selon l'une quelconque des revendications 3 à 8, dans lesquelles une lame racloir (62) est montée sur une face extérieure dudit obturateur (60), et adaptée pour pousser directement les déchets et en même temps pour racler ledit plateau pendant ladite course de retour.

10. Les toilettes chimiques portatives selon la revendication 9, dans lesquelles ladite lame racloir (62) est inclinée par rapport audit obturateur (60).

11. Les toilettes chimiques portatives selon l'une quelconque des revendications précédentes, dans lesquelles lesdites courses d'avancement et de retour dudit plateau à partir de ladite position d'utilisation sont toutes les deux commandées par lesdits moyens de commande.

12. Les toilettes chimiques portatives selon la revendication 11, dans lesquelles ladite course de retour à ladite position d'utilisation est assistée par des moyens de retour élastiques.

13. Les toilettes chimiques portatives selon l'une quelconque des revendications précédentes, dans lesquelles lesdits moyens de commande comportent un dispositif à pédale.

14. Les toilettes chimiques portatives selon l'une quelconque des revendications précédentes, dans lesquelles ledit plateau est constitué d'au moins principalement une matière plastique à laquelle est ajouté un agent antibactérien.
